# DEMANDE DE BREVET EUROPEEN

(11) **EP 2 380 823 A1**
(43) Date de publication de la demande: **26.10.2011**
(21) Numéro de dépôt: 10160774.5
(22) Date de dépôt: 22.04.2010
(51) Int. Cl.: B65F 1/00, B65F 1/06, B65F 1/14

(54) **Dispositif de recueil de déchets, avec sacs de rechange et compartiments de tri sélectif.**

(71) Demandeur: Pugliese, Giuseppe, 91270 Vigneux-Sur -Seine (FR); Charras, Serge, 91210 Draveil (FR)
(72) Inventeur: Pugliese, Giuseppe, 91270 Vigneux-Sur -Seine (FR); Charras, Serge, 91210 Draveil (FR)
(74) Mandataire: Pontet, Bernard

(57) **Abrégé**

La présente invention concerne un dispositif de recueil de déchets, typiquement une poubelle pour déchets ménagers. Ce dispositif comprend une structure de maintien (2) à laquelle est suspendue un sac jetable (31) dont l'extrémité est maintenue ouverte. Ce dispositif peut en outre contenir une pluralité de sacs (31) de rechange superposés entre eux en une liasse (39) suspendue. La structure de maintien (2) est montée de façon pivotante vers le haut et permet ainsi d'extraire facilement le sac (31) une fois plein.
Les découpes des sacs (31) de rechange de cette liasse (39) de recharges forment une découpe traversante (310), qui permet de la suspendre autour de la structure de maintien (2). La structure de maintien (2) coulisse dans cette découpe de suspension (310) lorsque l'on tire un nouveau sac (31) à partir de la liasse (39) de recharge pour le mettre en position.

## Description

La présente invention concerne un dispositif de recueil de déchets, typiquement une poubelle pour déchets ménagers. Ce dispositif comprend une structure à laquelle est suspendue un sac jetable et qui le maintient ouvert à une de ses extrémités. Ce dispositif peut en outre contenir une pluralité de sacs de rechange superposés entre eux en une liasse suspendue. Les découpes des sacs de rechange de cette liasse de recharges forment une découpe traversante, qui permet de la suspendre autour de la structure de maintien Cette structure de maintien coulisse dans cette découpe de suspension lorsque l'on tire un nouveau sac à partir de la liasse de recharge pour le mettre en position.

Elle concerne en outre un sac ou une liasse de sacs avec découpe de suspension correspondant cette structure de maintien.

Pour le recueil des déchets variés, typiquement des déchets ménagers ou produits par de petites collectivités, des poubelles classiques comprennent un conteneur rigide parfois muni d'un couvercle à basculement. Dans ce type de poubelle, on insère souvent un sac jetable qui est fixé sur les bords de l'ouverture du conteneur, pour des raisons de commodité d'enlèvement et pour limiter le nettoyage du conteneur.

Pour faciliter le remplacement d'un sac plein par un nouveau sac ne pas avoir à chercher si les sacs de rechange ne sont pas à portée de la main, le document EP 1 602 598 décrit un conteneur dans le fond duquel est prévu un compartiment où l'on stocke des sacs de rechange mis à plat et enroulés sur eux-mêmes sous la forme d'un rouleau. En tirant l'extrémité du rouleau vers le haut, on dévide un nouveau sac que l'on peut ensuite ouvrir pour en accrocher les bords autour de l'ouverture du conteneur.

Ce t**ype** de stockage des recharges présente toutefois des inconvénients, par exemple il faut plonger le bras au fond du conteneur pour saisir l'extrémité du sac de rechange, ce qui n'est par exemple ni très agréable ni très hygiénique. De plus le conteneur présente une ouverture latérale qui ne permet pas une étanchéité parfaite lors d'un lavage à grande eau. En outre, ce système n'est pas compatible avec des sacs disponibles en rouleau, par exemple des sacs individuels tels que des sacs de récupération.

Depuis peu de temps, la collecte des déchets et des sacs de déchets se fait parfois de façon sélective en fonction du type de déchets. Les utilisateurs sont invités à trier eux-mêmes leurs déchets, et des conteneurs spécifiques à chaque type sont utilisés pour la collecte extérieure par les véhicules spécialisés.

Au sein d'un foyer, ou d'une petite collectivité, certains dispositifs sont apparus pour recueillir séparément les différents types de déchets tout en limitant l'encombrement et la visibilité. Par exemple, plusieurs seaux de formes complémentaires sont disposés l'un à côté de l'autre dans un tiroir coulissant qui s'escamote dans un meuble de cuisine. Une autre solution comportant plusieurs casiers parallélépipédiques superposés et munis chacun d'un seau rectangulaire basculant est décrite par le document EP 0 979 787.

La solution consistant à utiliser plusieurs poubelles individuelles l'une à côté de l'autre n'est pas très satisfaisante, par exemple par manque d'uniformité esthétique ou ergonomique ou hygiénique, et augmente le nombre de conteneurs à manipuler.

De plus, ces conteneurs multiples ne sont pas prévus pour permettre le stockage et la mise en place faciles de sacs de rechange, et même la solution citée plus haut n'est pas forcément évidente à appliquer simplement.

Un but de l'invention est de pallier les inconvénients de l'état de la technique, et en particulier ceux cités ci-dessus.

### Exposé de l'invention

L'invention propose un dispositif de recueil de déchets notamment ménagers, du type comportant au moins un sac poubelle jetable. Selon l'invention, ce dispositif comprend une structure de maintien sensiblement horizontale soutenant l'extrémité ouverte de ce sac et entourant et maintenant écartés les bords de cette extrémité ouverte.

Selon l'invention, la structure de maintien comprend un cadre de maintien entourant l'ouverture d'utilisation et monté sur des moyens de pivotement permettant de lever l'un des côtés de ce cadre pour dégager un passage plus large que l'ouverture d'utilisation, permettant ainsi l'extraction d'un sac plein. Ce cadre peut être complètement fermé, mais peut aussi n'être fermé que sur la plus grande part de son pourtour, par exemple de l'ordre de au moins 75%, ou par exemple sur trois de ses quatre côtés dans le cas d'une forme rectangulaire.

Ce dispositif est en outre agencé pour contenir une pluralité de sacs de rechange superposés entre eux en une liasse suspendue à cette structure de maintien à côté du sac en cours d'utilisation.

Selon l'invention, le dispositif permet d'utiliser une telle liasse comportant au moins une ouverture de suspension formée par superposition de découpes communes à ces sacs de rechange et entourant au moins une partie de cette structure de maintien agencée pour coulisser dans cette découpe de suspension lorsque l'on sépare de la liasse le bord de l'extrémité ouverte du premier sac de rechange.

On voit ici, ainsi qu'à la lecture de la suite de la description, que l'invention permet une mise en place plus simple des nouveaux sacs. Cela est vrai en particulier grâce au guidage continu fourni par la structure de maintien pour le nouveau sac, et aussi parce que la mise en place se fait sans se baisser, à la hauteur de l'extrémité ouverte et non en bas du sac ou pire au fond d'un conteneur.

### Remarque sur l'état de la technique

Dans l'état de la technique, le document JP 09 103207A décrit un conteneur mono compartiment pour recevoir les déjections canines préalablement emballées dans un sachet (« vinyl bag »). Ce sachet est posé sur un couvercle basculant en deux parties solidaires, qui s'ouvre pour laisser tomber le sachet dans un sac maintenu ouvert à l'intérieur du conteneur par des rails horizontaux ou des crochets solidaires du conteneur. Ces rails supportent plusieurs sacs pliés, en attente. L'extraction du sac usagé se fait par une porte verticale permettant d'accéder au sac par le côté du conteneur.

L'invention se distingue du document JP 09 103207A, entre autres, par le fait que ce document ne divulgue pas l'utilisation d'un cadre ou d'une structure pivotante ni même mobile pour supporter le sachet concerné, non plus qu'un dispositif multi-emplacements.

Contrairement à l'invention, ce document propose une extraction par une porte latérale, ce qui rendrait inutile la fonction de pivotement proposée par l'invention. De plus, le but recherché par ce document est de recevoir les déjections canines au sein d'un espace public, et donc positionné dans des endroits de promenade, et non aux emplacements de collecte des déchets ménagers. En outre, s'agit d'un type unique de déchet pour lequel la question du tri ne se pose pas.

Un autre document, le FR 1 303 386, décrit un sac en papier pour des ordures ménagères, à fond plat et muni de parois latérales repliables comportant des trous ou des fentes. Il propose enfiler plusieurs de ces sacs sur deux bras parallèles solidairement portés par un support muni uniquement d'un fond horizontal et pouvant être accroché par exemple à l'intérieur d'une porte de meuble d'évier.

L'invention se distingue du document FR 1 303 386, entre autres, par le fait que ce document ne divulgue pas l'utilisation d'un cadre ou d'une structure pivotante ni même mobile pour supporter le ou les sacs, non plus qu'un dispositif multi-emplacements.

Ce document propose de fixer ce support, qui ne présente pas de parois extérieures sur trois de ses côtés, directement sur une porte pivotante d'un meuble. Dans une telle configuration, le fait d'ouvrir cette porte en la faisant pivoter rend les extrémités des bras de support tout à fait accessibles, et donc permet une extraction horizontale du sac, ce qui rendrait inutile la fonction de pivotement proposée par l'invention.

Différemment, l'invention permet de faciliter l'extraction du sac dans une configuration où l'extraction se fait par le dessus, par exemple dans le cas d'un bac à ouverture vers le haut ou dans le cas d'un tiroir coulissant, tels que décrits dans les exemples ci-après.

Selon une particularité de l'invention, la partie de la structure de maintien entourant l'ouverture du sac en position d'utilisation est agencée pour coulisser au travers d'une même découpe de suspension portée par la liasse de sacs de rechange.

En alternative, la structure de maintien entourant l'ouverture du sac en cours d'utilisation peut présenter une pluralité de parties agencées pour coulisser au travers d'une pluralité de découpes de suspension portées par la liasse de sacs de rechange. Par exemple la structure de maintien comporte plusieurs tiges passant dans plusieurs découpes différentes de la liasse, et dont l'extrémité libre permet l'extraction du sac une fois celui rempli.

On voit que, dans un cas comme dans l'autre, l'installation de plusieurs nouveaux sacs de rechange peut se faire facilement « par l'avant » et depuis le haut, c'est-à-dire depuis le côté même d'où l'on se tient pour retirer le sac plein, dès que l'on a retiré ce sac plein.

En outre, il est possible de recharger avec des sacs préconditionnés en liasse, mais aussi en accrochant individuellement l'un après l'autre plusieurs sacs séparés. Il est donc ainsi possible d'utiliser des sacs individuels de diverses provenances.

Pour l'une ou l'autre de ces alternatives, la structure de maintien peut comprendre sur sa partie supérieure au moins deux accidents de forme dits picots de maintien, disposés sur des côtés sensiblement opposés de la zone entourant l'ouverture du sac en position d'utilisation. Ces picots de maintien sont disposés de façon à recevoir chacun au moins une partie du sac en position d'utilisation, partie allongée qui est ici appelée bretelle supérieure et est située entre la découpe de suspension et l'extrémité ouverte du sac.

Optionnellement, le dispositif comporte sur au moins un des côtés de la zone d'ouverture une pluralité de picots de maintien, par exemple en nombre impairs, disposés pour recevoir cette bretelle supérieure dans une position entrelacée entre ces mêmes picots de maintien.

Selon une autre particularité pouvant être combinée avec les autres, le dispositif comprend au moins deux accidents de forme, dits picots de soutien, disposés sur des côtés sensiblement opposés de la zone entourant l'ouverture du sac en position d'utilisation, par exemple sur les bords de la structure de maintien. Ces picots de soutien sont disposés de façon à recevoir chacun au moins une partie du sac en position d'utilisation, qui est ici appelée bretelle inférieure et est située à proximité de la découpe de suspension, mais du côté de l'extrémité fermée du sac.

Selon les besoins et/ou l'agencement de la structure de maintien, la bretelle inférieure est accrochée aux picots de maintien en passant soit par l'extérieur puis par dessus cette structure, soit directement par l'intérieur de son pourtour.

La tenue du sac en charge en est ainsi améliorée, ainsi que la régularité de son positionnement sur le pourtour de la structure de maintien. De plus, on limite ainsi les espaces entre le sac et ce pourtour, et donc aussi les risques de chutes de déchets en dehors du sac.

Dans un mode de réalisation de l'invention, la structure de maintien est fixée sur ou supportée par au moins une paroi intérieure d'un conteneur rigide entourant le sac en position d'utilisation et les sacs de rechange.

Plus particulièrement, la structure de maintien est fixée sur ou supportée par au moins une paroi d'un conteneur accessible par le haut, à travers un couvercle mobile ou par extraction de la structure de maintien hors dudit conteneur.

Selon une particularité, le cadre de maintien est porté par au moins deux parties de support faisant saillies (par exemple des pattes ou épaulements) sur les parois intérieures du conteneur, au moins l'une desdites saillies comprenant une rainure ou un perçage recevant une portion sensiblement rectiligne du cadre de maintien pour former les moyens de pivotements permettant de relever ledit cadre.

L'invention permet ainsi de maintenir un passage d'air important autour du sac en position d'utilisation, ce qui lui permet de se déployer sans être gêné par une surpression dans le fond du conteneur et en limitant les courants d'air qui existent lorsque l'air ne peut s'échapper que par de petits passages.

La mise en place et le relevage du cadre sont ainsi simples, et la réalisation en est simple et économique car ne nécessitant pas une fabrication de précision ou des matériaux coûteux. Dans le cas d'une simple rainure, le cadre de maintien peut être retiré complètement et facilement sans aucun démontage, par exemple pour échange ou nettoyage.

Tout ou partie des sacs de rechange peut cependant aussi rester suspendus en permanence sur le cadre de maintien, à l'une de ses extrémités, même lorsqu'un sac est ouvert en position d'utilisation.

Optionnellement, au moins l'une des saillies de support présente une forme et une dimension transversale lui permettant de coulisser au travers de l'ouverture de suspension des sacs de rechange, et est disposée suffisamment dans l'alignement du cadre de maintien pour recevoir lesdits sacs de rechange et permettre leur coulissement depuis la position de stockage à la position d'utilisation.

Cette saillie peut ainsi accueillir une grande épaisseur de sacs de rechange, qui peuvent être logés dans une partie couverte ou cachée du conteneur, tout en gardant le cadre de maintien facile d'accès et de maniement ou démontage.

Dans le même esprit, l'invention propose ainsi un conteneur dans lequel sont prévus des moyens de fixation ou de support d'une pluralité de structures de maintien disposées l'une à côté de l'autre pour recevoir concurremment une pluralité de sacs en position d'utilisation dans une pluralité d'emplacements.

Plus particulièrement, les structures de maintien d'au moins deux emplacements contigus sont agencées et comprennent des moyens de pivotement permettant de relever leurs structures de maintien respectives par pivotement autour d'un même axe horizontal, et sont agencées pour permettre de remplacer ces structures de maintien respectives par une seule structure de maintien apte à soutenir et maintenir ouvert l'extrémité d'un sac sur une zone couvrant les deux emplacements.

Un même bac ou conteneur peut ainsi être utilisé avec différentes combinaisons de cadres de maintien, et de tailles de sacs, selon les besoins en quantité de déchets à recueillir, ou en nombre de types différents de déchets à trier.

Ce conteneur peut en outre comprendre ou non des cloisons verticales entre les emplacements, et celles-ci peuvent être amovibles pour permettre le nettoyage ou le changement de tailles de sacs.

L'invention peut cependant aussi comprendre un dispositif dans lequel la structure de maintien est fixée directement à son environnement tel qu'un mur ou un poteau, ou à un dispositif n'entourant pas complètement le sac en utilisation.

Selon un autre aspect de l'invention, il est proposé un sac pour une utilisation dans un dispositif de recueil de déchets tel que décrit ici, et comprenant dans ses parois, du côté de son extrémité ouverte, au moins deux découpes de suspension agencées pour coopérer avec la structure de maintien de ce dispositif de recueil des déchets. Ces découpes de suspension sont disposées de façon à permettre le pliage d'un ou plusieurs exemplaires ce sac en une liasse plane dans laquelle la superposition des découpes de suspension de chacun des sacs forme dans cette liasse une découpe traversante.

D'autres particularités et avantages de l'invention ressortiront de la description détaillée d'un mode de mise en oeuvre nullement limitatif, et des dessins annexés sur lesquels :
- la FIGURE 1 est une vue en perspective illustrant un premier mode de réalisation de l'invention, avec un conteneur à trois emplacements et cloisons amovibles ;
- la FIGURE 2 est une vue partielle de dessus de la structure de maintien dans une version comprenant un cadre avec deux picots de maintien et coulissant dans un sac à une découpe large ;
- la FIGURE 3 est une vue partielle de dessus de la structure de maintien dans une version comprenant un cadre avec deux fois trois picots de maintien, coulissant dans un sac avec une ouverture large et recevant une bretelle inférieure à trois découpes de soutien ;
- la FIGURE 4 est une vue en coupe sagittale du mode de réalisation préféré, en position d'utilisation ;
- la FIGURE 5 est une vue partielle en coupe sagittale du mode de réalisation préféré, en position d'extraction d'un sac plein ;
- la FIGURE 6 est une vue en perspective d'un sac selon l'invention dans une version à ouverture large et pliage latéral en accordéon, en position ouverte et sous la forme d'une liasse de recharge ;
- la FIGURE 7 est une vue en perspective d'un deuxième mode de réalisation préféré, avec un meuble de type support d'évier contenant un chariot coulissant frontal portant une structure de maintien à trois cadres pivotants ;
- la FIGURE 8 est une vue partielle représentant le chariot coulissant du deuxième mode de réalisation ;
- la FIGURE 9 est une vue en coupe sagittale représentant le cadre de maintien du deuxième mode de réalisation dans une position d'utilisation ;
- la FIGURE 10 est une vue en coupe sagittale représentant le cadre de maintien du deuxième mode de réalisation dans une position en cours d'extraction d'un sac plein ;
- la FIGURE 11 est une vue en perspective d'un troisième mode de réalisation de l'invention, avec une structure porteuse en fil métallique à cinq emplacements portant quatre structures de maintien ouvertes sur un de leur côté, et dont l'une est équipée d'une liasse de sacs à bretelles avec un sac en position de remplissage ;
- la FIGURE 12 illustre une liasse de sacs à bretelles pouvant être utilisés avec le dispositif selon l'invention, et en particulier dans le troisième mode de réalisation.

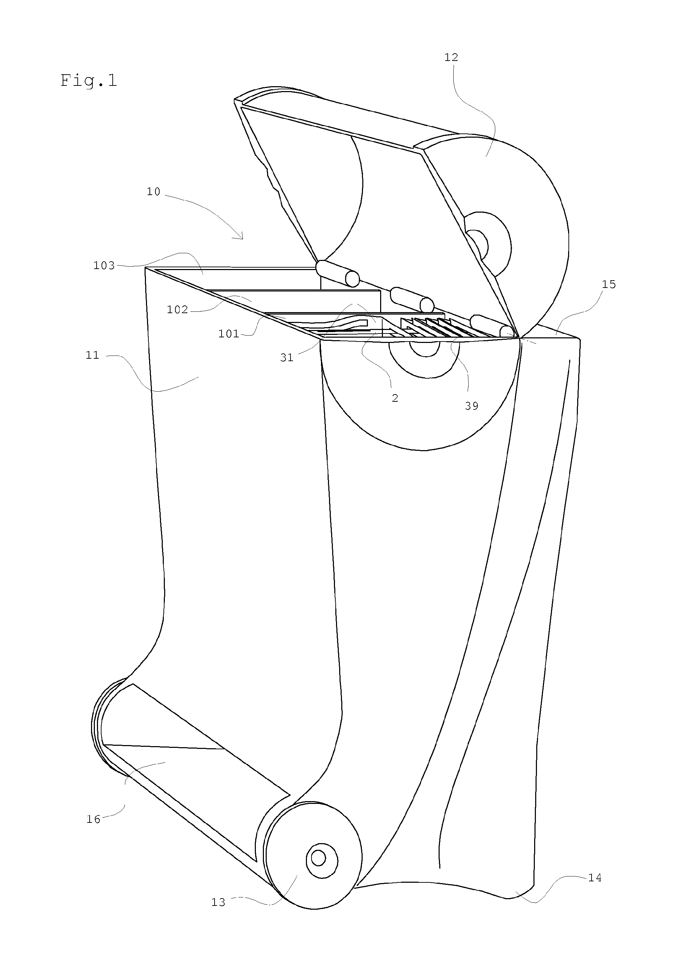

Dans un premier mode de réalisation illustré en FIGURE 1, le dispositif selon l'invention comprend un conteneur 1 avec un corps 11 à ouverture 10 vers le haut, de section horizontale sensiblement rectangulaire. Ce conteneur est monté d'un côté sur deux roues 13 selon un même axe de rotation, et reposant de l'autre côté sur une partie du corps dépassant vers le bas pour former une ou deux béquilles de stabilité 14.

Le conteneur 11 est fermé par un couvercle 12 basculant vers l'arrière par pivotement autour d'un axe, voire plusieurs, sensiblement parallèle à l'axe des roues 13 et surplombant la partie béquille 14. Sur sa partie avant, le conteneur 11 comporte un logement 16 d'ouverture et de section sagittale sensiblement rectangulaires destiné à recevoir des déchets non salissants, par exemple de forme sensiblement plane tels que des journaux 16.

A l'intérieur du corps 11, proche de ou affleurant l'ouverture 10, une structure de maintien comprenant un cadre 2 supporte un sac 31 dont il maintient l'extrémité ouverte en position écartée et vers le haut. Ce sac 31 est disposé en position d'utilisation sur le cadre 2, du côté de l'ouverture du couvercle, dit côté avant, dans le présent exemple situé du côté des roues 13.

Dans la partie arrière du corps 11, plusieurs sacs de rechange individuels ou en liasse 39 sont enfilés autour du cadre de maintien 2 ou d'une partie située dans son prolongement et présentant une continuité avec ce cadre de maintien. A partir de leur position de rechange, le sac 31 le plus vers l'avant de la liasse 39 a été ouvert en écartant son bord avant et amené en positon d'utilisation sans quitter la continuité de support formée par la structure de maintien.

La partie arrière du corps 11 dépasse vers l'arrière par rapport à l'axe d'ouverture du couvercle 12, en un volume 15 entourant les sacs de rechange 29 et pouvant remplir d'autres fonctions techniques, par exemple la fixation du couvercle 12 et sa butée vers l'arrière.

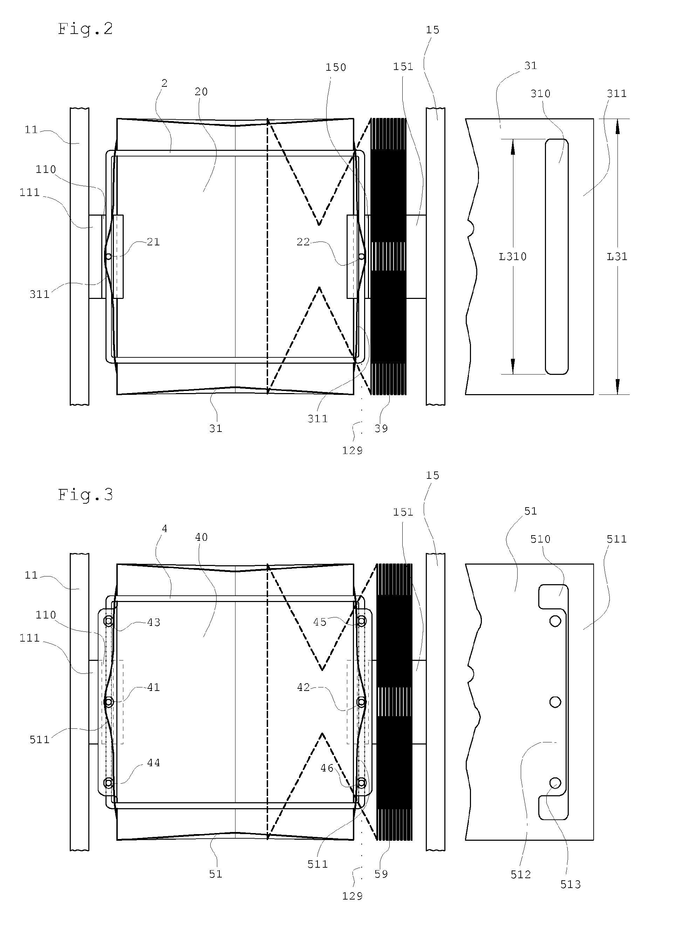

En FIGURE 2 est illustrée la structure de maintien dans une première version. Cette structure de maintien comprend en particulier un cadre 2, par exemple en tringle métallique refermée sur trois ou quatre côtés en un carré ou un rectangle, dont l'ouverture 20 entoure les bords de l'extrémité ouverte d'un sac 31.

Ce cadre 2 est porté par deux pattes 111 et 151 formant saillies et respectivement solidaires des parois arrière 15 et avant du corps 11 du conteneur 1. Chacune de ces pattes porte vers le haut une rainure respectivement 111 et 151 parallèle à la paroi correspondante, et recevant une partie rectiligne du cadre de maintien 2. Ces rainures constituent des moyens de pivotements simples et rustiques du cadre 2, qui peut ainsi pivoter dans l'une ou l'autre de ces rainures, ou être extrait facilement sans démontage particulier. Dans d'autres modes de réalisation, des moyens de pivotements plus sophistiqués peuvent aussi être utilisés, par exemple verrouillables et retenant le cadre vers le haut sur l'un ou l'autre de ses côtés.

La patte arrière 151 de support porte une liasse 39 de sacs de rechange, et présente une longueur déterminée en fonction du nombre de sacs de rechange que l'on veut pouvoir loger dans le conteneur 1.

Le premier sac 31 est déployé (tracé en pointillé) tout en restant enfilé autour du cadre de maintien 2. Ce cadre 2 porte deux picots de maintien 21, 22 sur les deux côtés opposés avant et arrière, dirigés vers le haut et à l'extérieur desquels les bords 311 correspondant du sac peuvent venir s'engager pour les maintenir écartés l'un de l'autre. En variante, ces picots peuvent présenter différentes formes, et/ou être portés dans la même région sur les pattes de support 111 et 151 ou sur les parois proches.

Ainsi qu'illustré en vue partielle dans la partie droite de la figure, le sac 31 lorsqu'il est plié présente une découpe 310 dite de suspension proche de l'extrémité ouverte, d'une longueur L310 proche de la largueur L31 du côté du sac ou au moins dépassant sa moitié. La partie située entre cette découpe 310 et le bord du sac du côté de l'extrémité ouverte forme ainsi une sorte de lanière ou bretelle dite supérieure 311 qui peut être engagée dans les picots de maintien 21, 22 ou accrochée de façon différente ou garder le sac 31 ouvert lorsqu'il est en position d'utilisation.

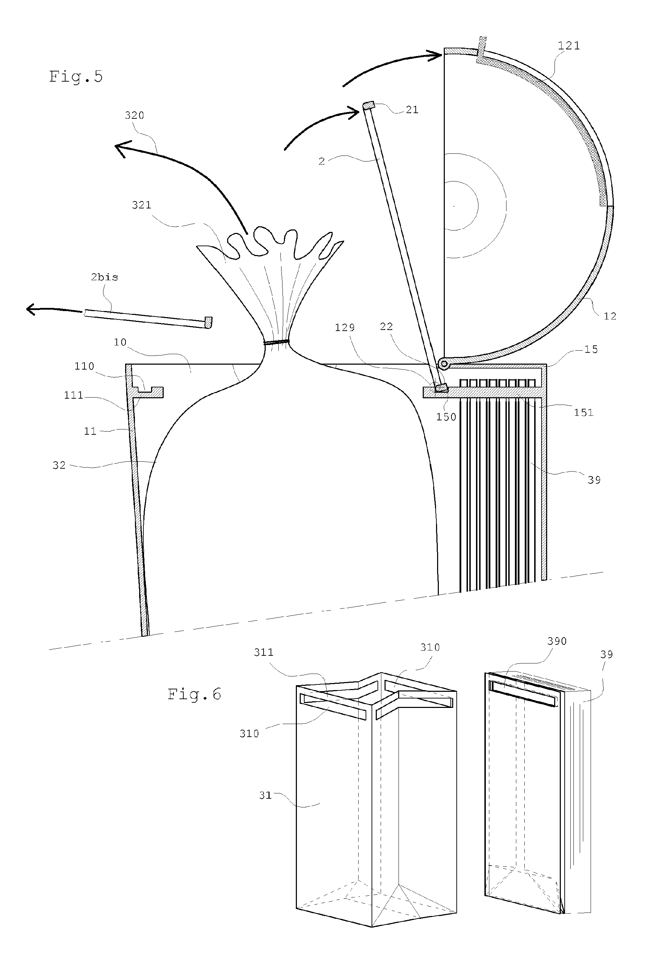

Ainsi qu'illustré en FIGURE 6, le sac peut être plié en accordéon sur ses côtés latéraux. La découpe de suspension 310 existe sur le côté avant et sur le côté arrière du sac, et les côtés latéraux portent eux-mêmes une découpe correspondante, dont la forme correspond à celle de la découpe de suspension 310 avant et arrière de façon à ce qu'un sac plié présente une découpe traversante, et donc qu'une liasse de tels sacs pliés présente elle aussi une telle découpe traversante.

En FIGURE 3 est illustrée une variante dans laquelle un cadre de maintien 4 présente plusieurs picots de maintien 41 à 46 répartis autour de son ouverture 40.

En une variante pouvant être combinée avec d'autres, le sac 51 déployé comprend une ou plusieurs ouvertures dites de soutien 513, dans un onglet 512 dépassant sur le bord de la découpe de suspension 510 située du côté opposé à la bretelle supérieure 510. Ces ouvertures de soutien peuvent ainsi être accrochées sur les picots de maintien ou de soutien 41 à 46, en passant par l'intérieur de l'ouverture 40 du cadre 4 comme illustré ou en passant par le dessous et l'extérieur de ce cadre selon la configuration et le mode de réalisation.

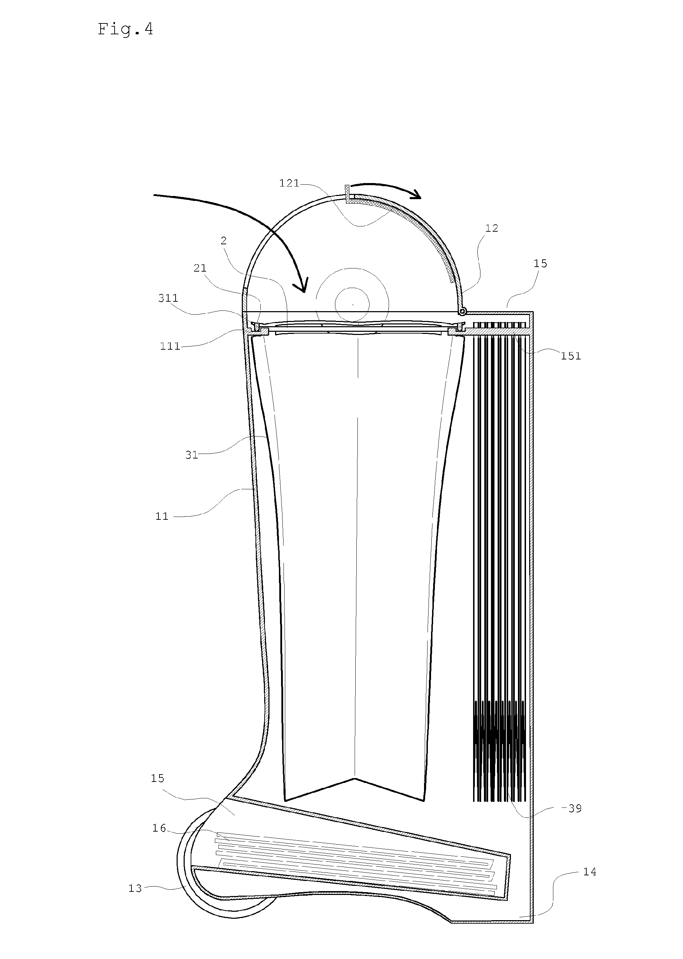

Ainsi qu'illustré en FIGURE 4, le dispositif de recueil avec cadre de maintien 2 et pattes de support 111 et 151 peut être intégré dans un conteneur 1 vertical à ouverture vers le haut, par exemple réalisé en matière plastique moulée ou roto moulée d'une pièce étanche. Ce corps d'une seule pièce intègre un logement inférieur donnant vers l'avant pour des déchets non salissants.

Le couvercle 12 en forme de demi-cylindre horizontal présente une partie avant 121, une portion de ce demi-cylindre, coulissant vers l'arrière autour d'un axe parallèle à celui du demi-cylindre voire confondu avec lui. Cette partie avant forme ainsi un volet s'escamotant à l'intérieur du couvercle 12. Cette partie avant permet ainsi un accès de faible encombrement et de manipulation simple, suffisant pour introduire des déchets dans le sac.

Ainsi qu'illustré en FIGURE 5, l'ensemble du couvercle 12 peut être soulevé pour donner un accès complet à l'ouverture 10 du conteneur 1, 11, au cadre de maintien 2 et au sac 31 qu'il supporte.

Une fois les bords 321 du sac plein 32 détachés des picots de maintien 21, 22 et sortis des bords du cadre, le cadre de maintien 2 peut être relevé vers le haut, autour d'un axe 129 parallèle à l'axe du couvercle 12 ou à la face avant du conteneur, pour libérer un espace permettant l'extraction du sac plein 32.

Si besoin et en fonction de la forme des découpes de suspension, le cadre 2bis peut aussi être dégagé des rainures 110 et 150 de support, puis être complètement retiré de l'ouverture du conteneur, par exemple par un mouvement horizontal vers l'avant pour sortir des découpes de suspension.

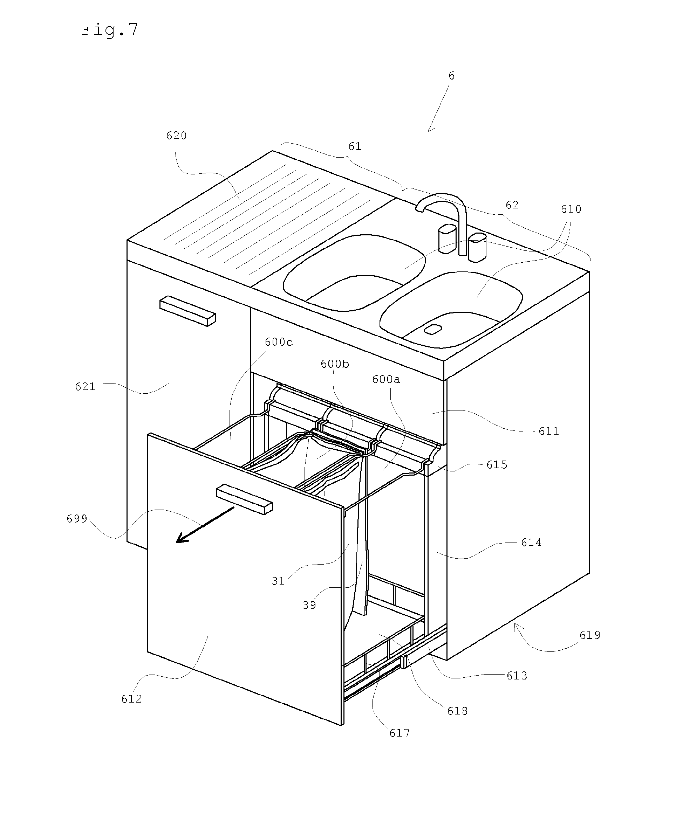

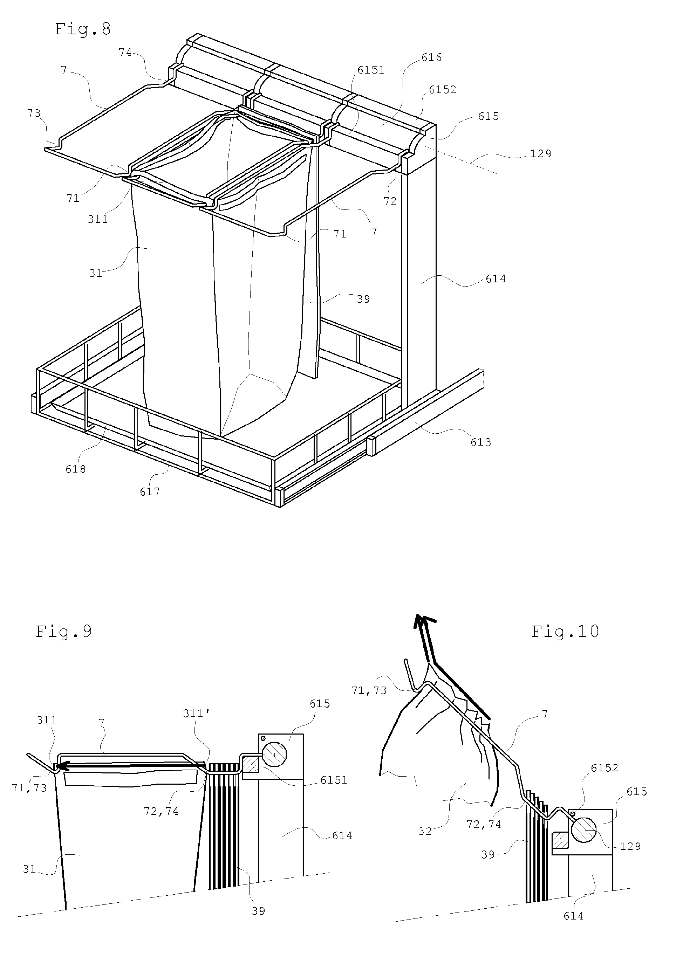

Les FIGURE 7 et FIGURE 8 illustrent un deuxième mode de réalisation préféré, avec le dispositif de recueil de déchets contenu et compris dans un meuble de cuisine.

Il peut s'agir de nombreux types différents de meubles de cuisine, mais l'invention est particulièrement intéressante et adaptée à un meuble 6 de type support d'évier standard tel que présenté ici. En effet, les dimensions typiques de ce genre de meuble sont compatibles avec un dispositif selon l'invention et plus particulièrement à plusieurs emplacements pour le recueil sélectif, qui permet d'utiliser avantageusement l'espace restant sous le volume occupé par les bacs de l'évier. Par exemple, la dimension la plus courante est un meuble de 120 cm de large portant un évier double bacs 610 de 80 cm à côté d'un égouttoir de 30 cm. Un espace 611 de 80 cm de large et compris entre 10 cm et 20 cm de haut est occupé par le volume des bacs 610 de l'évier. Cette contrainte est gênante pour installer un rangement classique tel qu'un placard ou un tiroir 621 de dimensions standard, comme ici dans la partie latérale 62 située sous l'égouttoir 620.

Dans ce mode de réalisation, l'espace libre restant est occupé par un chariot 612 coulissant vers l'avant pour sortir de dessous de l'évier. Ce chariot est fermé par une porte de même style que celle du rangement latéral 621, par exemple de même hauteur ou uniquement de la hauteur de l'espace utilisé. Dans sa partie basse, le chariot comprend un panier 617, par exemple en fil métallique, dans lequel repose un plateau 618 amovible, qui recueille les salissures ou débris tombant des sacs poubelles et peut être retiré pour être facilement nettoyé.

Ce chariot 612 coulisse sur un mécanisme de coulisse tel qu'un rail 61 porté par les faces latérales du meuble 6 ou par sa face inférieure 619. Il comprend un portique formé par deux montants 614 supportant la structure de maintien à trois emplacements selon l'invention, par exemple d'environ 20 cm de large chacun.

Cette structure de maintien comprend une traverse 615 parallèle à la façade 612. Dans chacun de ses emplacements, la traverse 615 supporte un cadre de maintien 7 monté sur un cylindre 616, pivotant ainsi autour d'un axe commun 129 compris dans la traverse ou proche d'elle. Dans cet exemple, on voit que le pivotement du cadre 7 est guidé et se fait autour d'une position fixe de son axe 129, ce qui procure en outre une fonction de retenue en translation du cadre 7, ce qui permet de retirer le sac plein 32 du cadre 7 sans risquer d'entraîner ce cadre 7 en même temps.

Ce cadre de maintien 7 est par exemple réalisé par une tringle mise en forme pour présenter quatre accidents de forme 71 à 74 réalisant la fonction de picot de maintien. Ces accidents de forme ont ici la forme d'un décrochement vers le bas dans lequel peut venir s'accrocher les bretelles supérieures 311 avant et arrière d'un sac 31, par exemple comme représenté en FIGURE 6. Les accidents de forme 72 et 74 situés les plus en arrière présente une longueur de décrochement suffisamment importante pour accueillir plusieurs sacs de rechange 39.

La traverse 615 présente une butée basse supportant le cadre de maintien 7 dans sa position d'utilisation sensiblement horizontale. Cette butée basse présente ici la forme d'un épaulement 6151 qui supporte le dessous du cadre 7 sur sa surface supérieure, et/ou supporte la partie arrière du décrochement de maintien 72, 74 sur sa face avant.

Optionnellement, cette traverse 615 comprend aussi une butée haute qui limite vers le haut le pivotement du cadre de maintien, par exemple de l'ordre de 30° à 45° par rapport à l'horizontale. Cette butée permet par exemple d'éviter que le cadre 7 ne remonte trop haut et ne vienne salir ou endommager la partie supérieure du meuble, et de guider l'utilisateur vers la position optimale pour l'extraction du sac comme décrit plus loin. Cette butée haute 6152 présente ici la forme d'un épaulement supérieur, ou d'une barre maintenue entre deux flasques latérales comme en FIGURE 9 et FIGURE 10.

La forme des accidents de forme 71 à 74 et le pivotement du cadre de maintien 7 se combinent pour faciliter l'extraction du sac une fois rempli. Ainsi qu'illustrés en FIGURE 9, les décrochements de maintien 71 à 74 présentent chacun un plan incliné menant du fond du décrochement vers l'avant du cadre. Ce plan incliné facilite le rapprochement vers l'avant de la bretelle supérieure 311' située à l'arrière, selon une simple traction sensiblement horizontale telle que représentée par la flèche horizontale, et sans nécessiter de soulever significativement cette bretelle arrière 311'.

Ainsi qu'illustrée en FIGURE 10, cette traction simple vers l'avant permet de rapprocher la bretelle arrière 311' de la bretelle avant 311 pour saisir ainsi les deux bretelles ensemble, par exemple d'une seule main. Il est alors possible de continuer naturellement le mouvement en utilisant les deux bretelles 311 et 311' comme des anses pour soulever le sac 31 ou 32 vers le haut. La liberté de pivotement du cadre de maintien 7, alliée aux décrochements dont la forme n'accroche pas vers l'avant et vers le haut, permet alors d'extraire plus facilement le sac, à la fois vers le haut et vers l'avant. Le sac est alors extrait de son logement en laissant le cadre 7, retenu en son axe 129 de pivotement par le cylindre 616, s'échapper de lui-même des découpes de suspension 310 du sac 31 ou 32.

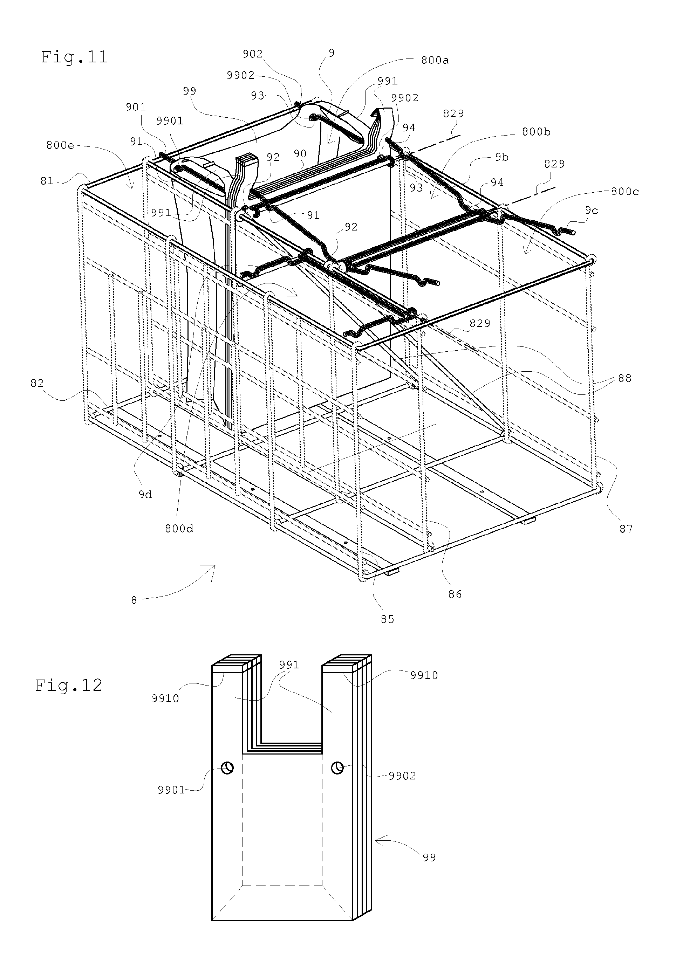

En FIGURE 11 est illustré un troisième mode de réalisation de l'invention, qui ne sera décrit que dans ses différences avec le deuxième mode de réalisation et peut être implanté dans le même type de meuble (6).

Dans ce mode de réalisation, le dispositif de recueil comprend une structure porteuse 8, par exemple en tige ou fil métallique cintré et soudé, par exemple en acier inoxydable. Cette structure porteuse 8 comprend un cadre supérieur 81 horizontal 1 en fil métallique présentant plusieurs ouvertures destinées à différents types de déchets, ici cinq ouvertures, formant dans la structure 8 l'ouverture d'accès à autant d'emplacements 800a, 800b, 800c, 800d et 800e. Ce cadre supérieur est relié à un cadre inférieur 82 horizontal par des panneaux en fil métallique, ici trois panneaux 85, 86 et 84 verticaux et parallèles entre eux. La forme de la structure porteuse 8 est maintenue par triangulation grâce à des moyens de contreventement, ici deux tiges 88 réunissant le bord inférieur du panneau vertical de fond 87 avec le bord supérieur du panneau vertical intermédiaire 86. On remarque que ces deux tiges 88 de contreventement sont disposées de chaque côté d'une ouverture 800b du cadre supérieur 81, lorsque vues par le haut, de façon à n'empiéter sur le volume disponible d'aucun des différents logements 800a à 800e.

Dans cette structure porteuse 8, chacune des ouvertures peut être munie d'une structure de maintien, ou cadre de maintien 9, destinée à recevoir un sac poubelle, de façon similaire aux structures de maintien (2, 7) décrites pour les autres modes de réalisation. Dans cet exemple, quatre emplacements 800a à 800d sont munis d'un tel cadre de maintien 9, 9b, 9c et 9c (indépendants entre eux, en noir sur la figure), et le cinquième emplacement 800e reste disponible et plus facilement accessible pour recevoir des déchets plats tels que des journaux.

Dans le mode de réalisation décrit en FIGURE 11, chaque cadre de maintien 9 détermine une ouverture 800a sensiblement de la forme d'un rectangle. Ce cadre de maintien 9 est réalisé en une tige métallique unique cintrée de façon à ce que le cadre 9 ne soit fermé que sur trois côtés d'un rectangle, par exemple un grand côté central 90 et deux branches libres 901 et 902 formant les petits côtés d'extrémité.

Sur des deux côtés d'extrémité, le bout de la tige peut ainsi être insérée dans la découpe d'un ou plusieurs sacs, individuels ou réunis en une ou plusieurs liasses comme décrit précédemment. Il est ainsi possible d'utiliser des sacs munis chacun d'une grande découpe enserrant les deux branches libres 901 et 902 du cadre 9 comme les sacs décrits précédemment.

Avec le même cadre de maintien 9, il est aussi possible d'utiliser des sacs munis de plusieurs découpes distinctes recevant chacune l'une des branches libres 901 et 902. Il est ainsi possible d'utiliser des sacs d'un type existant tels que les sacs à bretelles livrés en liasses et distribués par les supermarchés, ici illustrés en FIGURE 12. Chacun de ces sacs 99 à bretelles, lorsqu'il est plié, présente deux parties latérales 991 formant chacune une avancée dépassant de chaque côté de l'ouverture du sac. A leur extrémité, les deux épaisseurs de chaque avancée 991 sont soudées 9910 ensemble pour un même sac, formant ainsi une anse ou bretelle de portage de chaque côté de l'ouverture du sac 99. Ces liasses de sacs 99 présentent en outre deux groupes distincts de perforations 9901 et 9902 situés chacun à la base d'une des deux bretelles 991. Ces perforations permettent d'enfiler la liasse de sacs 99 sur les deux branches libres 901 et respectivement 902.

Sur chacune des branches libres 901 et 902, la tige est cintrée pour présenter deux accidents de forme 91, 92 et respectivement 93, 94 assurant la fonction de picots de maintien, par exemple en forme de décrochements vers le bas.

Le long du côté central 90, la tringle formant le cadre de maintien est enroulée en plusieurs points autour d'une barre horizontale 81a du cadre supérieur 81, retenant ainsi le cadre de maintien 9 en une charnière de pivotement autour d'un axe horizontal 829.

De la même façon que décrit précédemment, il est ainsi possible de mettre en place une pluralité de sacs d'avance sur le cadre de maintien 9, 9b, 9c et 9d de chaque emplacement 800a à respectivement 800e, avec le premier sac maintenu ouvert par les décrochements 91 à 94. Lorsque le cadre est en position de remplissage, l'extrémité libre de chacune des branches libres 901 et 902 repose alors sur le cadre supérieur 81. Les quatre décrochements maintiennent le premier sac en position ouverte, et le reste de la liasse est suspendu dans les deux décrochements 92 et 94 situés à l'arrière des branches libres 901 et 902.

De préférence, les décrochements vers le bas 92 et 94 situés le plus près du côté central 90 présentent une longueur de décrochement déterminée pour accueillir les découpes de suspension 9901 et 9902 d'une pluralité de sacs de rechange en position pliée, par exemple une partie rectiligne d'au moins 10mm voire 20mm. Cette longueur de décrochement est plus grande que celle des décrochement 91 et 93 situés du côté de l'extrémité libre des côtés extérieurs 901 et 902, qui présente par exemple une longueur rectiligne inférieure à 5mm voire 0mm (c'est à dire un simple angle aigu).

Le cadre de maintien 9 peut ainsi contenir de nombreux sacs de rechange, par exemple de une à quatre liasses de cinquante sacs.

Comme précédemment décrit, le pivotement du cadre 9 autour de son axe 829 permet de soulever le sac plein en même temps qu'on l'extrait de son emplacement, pendant que le cadre 9 est retenu au niveau de son axe 829 et que ses branches libres 901 et 902 s'échappent des découpes 9901 et 9902 du sac.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif de recueil de déchets notamment ménagers, du type comportant au moins un sac (31, 51, 99) poubelle jetable, **caractérisé en ce qu'**il comprend une structure de maintien (2, 4, 151, 7, 9) sensiblement horizontale soutenant l'extrémité ouverte dudit sac et entourant et maintenant écartés les bords de ladite extrémité ouverte,
ladite structure de maintien comprenant un cadre de maintien (2, 4, 7) entourant l'ouverture d'utilisation et monté sur des moyens de pivotement (110, 150, 616) permettant de lever l'un des côtés dudit cadre pour dégager un passage (10) plus large que l'ouverture d'utilisation (20, 40), facilitant ainsi l'extraction (320) d'un sac plein (32),
le dispositif étant en outre agencé pour contenir une pluralité de sacs de rechange superposés entre eux en une liasse (39, 59) suspendue à ladite structure de maintien à côté du sac en cours d'utilisation,
ladite liasse comportant au moins une ouverture de suspension formée par superposition de découpes de suspension (310, 510) communes auxdits sacs de rechange et entourant au moins une partie de ladite structure de maintien (2, 4, 151, 7) agencée pour coulisser dans ladite découpe (310, 510) de suspension lorsque l'on sépare de la liasse le bord de l'extrémité ouverte du premier sac de rechange.

2. Dispositif selon la revendication 1, **caractérisé en ce que** la partie (2, 4) de la structure de maintien entourant l'ouverture du sac en position d'utilisation est agencée pour coulisser au travers d'une même découpe de suspension (390) portée par la liasse (39) de sacs de rechange.

3. Dispositif selon la revendication 1, **caractérisé en ce que** la structure de maintien (9) entourant l'ouverture du sac (99) en cours d'utilisation présente une pluralité de parties (901, 902) agencées pour coulisser au travers d'une pluralité de découpes de suspension (9901, 9902) portées par la liasse de sacs de rechange.

4. Dispositif selon l'une quelconque des revendications précédentes, **caractérisé en ce que** la structure de maintien (2, 4, 151) comprend sur sa partie supérieure au moins deux accidents de forme (21, 22, 41, 42) dits picots de maintien, disposés sur des côtés sensiblement opposés de la zone entourant l'ouverture du sac en position d'utilisation, lesdits picots de maintien étant disposés de façon à recevoir chacun au moins une partie du sac (31, 51) en position d'utilisation, dite bretelle supérieure (311, 511), située entre sa découpe de suspension (310, 510) et son extrémité ouverte.

5. Dispositif selon la revendication précédente, **caractérisé en ce qu'**il comprend au moins deux accidents de forme, dits picots de soutien (41, 42, 43, 44, 45, 46), disposés sur des côtés sensiblement opposés de la zone (40) entourant l'ouverture du sac (51) en position d'utilisation, les dits picots de soutien étant disposés de façon à recevoir chacun au moins une partie du sac en position d'utilisation, dite bretelle inférieure (512), située à proximité de sa découpe de suspension (510) et du côté de son extrémité fermée.

6. Dispositif selon la revendication 4, **caractérisé en ce que** la structure de maintien (7) comprend un cadre de maintien (7) entourant l'ouverture d'utilisation, réalisé en une tringle présentant quatre décrochements vers le bas (71 à 74) réalisant la fonction de picots de maintien.

7. Dispositif selon l'une quelconque des revendications précédentes, caractérisé en ce la structure de maintien (9) comprend un cadre de maintien (9) réalisé par une tringle cintrée pour former trois des quatre côtés d'un rectangle entourant l'ouverture du sac (99) en position d'utilisation, ledit cadre de maintien (9)
- d'une part pivotant autour d'un axe (829) parallèle au côté dit central (90) formé par la partie centrale de la tringle et
- d'autre part présentant, sur chacun des deux côtés dits extérieurs (901, 902) formés par les deux extrémités de la tringle, deux décrochements vers le bas (91, 92 respectivement 93, 94) recevant chacun une découpe (9901, 9902 respectivement 9901, 9902) du sac (99) en position d'utilisation, agencées pour maintenir ouvert ledit sac.

8. Dispositif selon l'une quelconque des revendications précédentes, **caractérisé en ce qu'**il comprend au moins un cadre de maintien porté par au moins deux parties de support (111, 151) faisant saillies sur les parois intérieures d'un conteneur (11) rigide entourant le sac (31, 51) en position d'utilisation et les sacs de rechange (39, 59), au moins l'une desdites saillies comprenant une rainure (110, 150) ou un perçage recevant une portion sensiblement rectiligne dudit cadre de maintien pour former les moyens de pivotements permettant de relever ledit cadre.

9. Dispositif selon la revendication précédente, **caractérisé en ce qu'**au moins l'une des saillies de support (151) présente une forme et une dimension transversale lui permettant de coulisser au travers de l'ouverture de suspension (390, 590) des sacs de rechange (39, 59), et est disposée suffisamment dans l'alignement du cadre de maintien (2, 4) pour recevoir lesdits sacs de rechange et permettre leur coulissement continu depuis la position de stockage à la position d'utilisation.

10. Dispositif selon l'une quelconque des revendications 7 à 9, comprenant un conteneur (11), ou une structure porteuse (8) réalisée en tiges métalliques, dans lequel sont prévus des moyens de fixation ou de support d'une pluralité de structures de maintien (2, 4, 151, 7, 9) disposées l'une à côté de l'autre pour recevoir concurremment une pluralité de sacs (31, 99) en position d'utilisation dans une pluralité d'emplacements (102, 102, 103, 600a, 600b, 600c, 800a, 800b, 800c, 800d).

11. Dispositif selon la revendication précédente, **caractérisé en ce que** les structures de maintien (2, 4, 151, 7, 9) d'au moins deux emplacements contigus (101, 102, 103, 600a, 600b, 600c, 800a à 800d) sont agencées et comprennent des moyens de pivotement (150, 616) permettant de relever leurs structures de maintien (2, 4, 7, 9) respectives par pivotement autour d'un même axe horizontal (129, 829), et sont agencées pour permettre de remplacer lesdites structures de maintien respectives par une seule structure de maintien de même type apte à soutenir et maintenir ouvert l'extrémité d'un sac sur une zone couvrant lesdits deux emplacements.

12. Dispositif selon l'une quelconque des revendications précédentes, **caractérisé en ce que** la structure de maintien (2, 4, 151, 7, 9) est fixée sur ou supportée par au moins une paroi (11, 612, 619) d'un conteneur (1, 6) accessible par le haut, à travers un couvercle mobile (121, 12) ou par extraction (699) de la structure de maintien (7, 9) ou de la structure porteuse (614, 8) hors dudit conteneur (6).

13. Sac (31, 51) pour utilisation dans un dispositif de recueil des déchets selon l'une quelconque des revendications 1 à 12, comprenant dans ses parois du côté de son extrémité ouverte au moins deux découpes de suspension (310, 510), agencées pour coopérer avec la structure de maintien (2, 4, 151) dudit dispositif de recueil des déchets et disposées de façon à permettre le pliage d'un ou plusieurs exemplaires dudit sac en une liasse (39) plane dans laquelle la superposition des découpes de suspension (310) de chacun des sacs (31) forme une découpe traversante (390) dans ladite liasse (39).

14. Sac (31) selon la revendication précédente, **caractérisé en ce que** les découpes de suspension comprennent quatre découpes réparties autour de l'ouverture dudit sac, lequel est plié de façon à superposer entre elles deux découpes de suspension (310) opposés en enserrant entre elles les deux autres découpes de suspension par un pliage en accordéon.

15. Sac (51) selon l'une quelconque des revendications 13 ou 14, **caractérisé en ce qu'**il comprend au moins deux découpes (512), dites de soutien, séparées des découpes de suspension (510) et situées à proximité de celles-ci du côté de l'extrémité fermée dudit sac, agencées de façon à pouvoir être chacune engagée sur au moins un accident de forme (41 à 46) porté par la structure de maintien (4), dit picot de maintien ou de soutien, et participer ainsi au soutien dudit sac (51) en position d'utilisation.
